Europäisches Patentamt

European Patent Office

Office européen des brevets

(11) Publication number: **0 231 060 B1**

## EUROPEAN PATENT SPECIFICATION

(45) Date of publication of patent specification: **21.04.93**    (51) Int. Cl.5: **G06F 15/72**

(21) Application number: **87300117.6**

(22) Date of filing: **08.01.87**

(54) **Fixed character string clipping in a graphics display system.**

(30) Priority: **21.01.86 US 821103**

(43) Date of publication of application:
**05.08.87 Bulletin 87/32**

(45) Publication of the grant of the patent:
**21.04.93 Bulletin 93/16**

(84) Designated Contracting States:
**DE FR GB IT**

(56) References cited:
**EP-A- 0 112 942**
**US-A- 3 816 726**

**IBM TECHNICAL DISCLOSURE BULLETIN, vol. 23, no. 1, June 1980, pages 155-157, New York, US; W.H. NIEHOFF: "Graphics clipping of polystrings and polygons"**

**COMPUTER, vol. 13, no. 7, July 1980, pages 59-68, Long Beach, US; J. CLARK: "A VLSI geometry processor for graphics"**

(73) Proprietor: **International Business Machines Corporation**
**Old Orchard Road**
**Armonk, N.Y. 10504(US)**

(72) Inventor: **Liang, Bob Chao-Chu**
**Box 522, Ryan Drive**
**West Hurley New York 12491(US)**

(74) Representative: **Killgren, Neil Arthur**
**IBM United Kingdom Limited Intellectual Property Department Hursley Park**
**Winchester Hampshire SO21 2JN (GB)**

## Description

The present invention relates to information handling systems and more particularly to information handling systems in which method and apparatus are employed to clip fixed character strings against a viewport in a graphics display system.

The following are systems representative of the prior art.

Woodford: "The Design and Implementation of the GINO 3D Graphics Software Package", SOFTWARE PRACTICE AND EXPERIENCE, Vol 1, 1971, pp 335-365, J Wiley and Sons, describes a graphics system permitting transformation and clipping. However, no details of the clipping are disclosed.

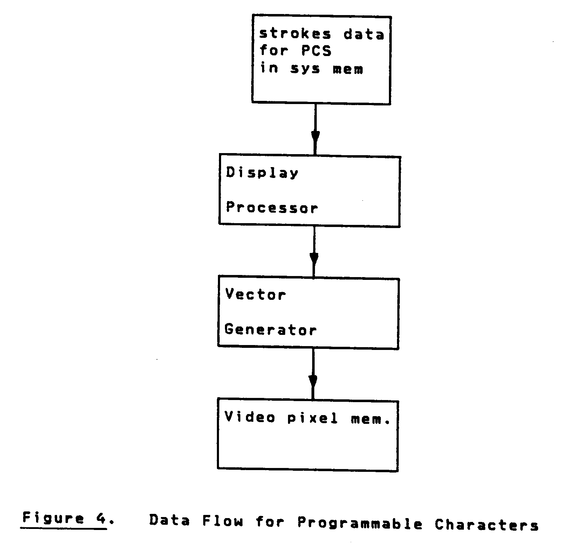

"Fundamentals of Interactive Comptuter Graphics" by Foley and Van Dam, published by Addison, Wesley publishing Company, 1982 at pages 152-153 and pages 848-485, discusses generally several techniques for clipping fixed character strings against a viewport. More specifically Figs 4.10, 4.11, 4.12, show three situations for clipping fixed character strings against the clipping window. Although the Foley and Van Dam text generally discusses the problem of clipping fixed character strings in a raster graphics display system, the text does not teach nor suggest the implementation as described and claimed herein according to the present invention.

Bresenham in an article entitled "Algorithm for Computer Control of Digital Plotter", IBM System Journal, Vol 4 Number 1, 1965, at pages 25-30, describes the basic vector generator which is employed in most graphics display systems.

However, the article does not teach the method for transforming and clipping fixed character strings in accordance with the present invention, which provides as claimed in claim 1 a method, in a graphics display system in which geometric primitives are defined in a world coordinate system, for clipping character strings comprising a number of fixed characters, each generated in a character box in a screen coordinate system, against a predetermined clipping box in the world coordinate system, the method comprising the steps of: transforming and storing the character string initial position, the size of the character box and an increment to step to the next character position from the screen coordinate system to the world coordinate system and for each character of the string; clipping the character against X and Y boundaries of the clipping box by testing the character position and the size of the character box in the world coordinate system to determine if any part of the character box when mapped to the world coordinate system falls within the X and Y boundaries and only issuing a draw character order for the character if no part of the character box falls outside the X and Y boundaries; updating the character position in the world coordinate system by the transformed increment to generate the next character position in the world coordinate system and updating the character position in the screen system by said increment to step to the next character position in said screen coordinate system.

In a further embodiment of the invention as disclosed in claim 2, the current position of the fixed character string is clipped in a prior step against one or more Z axis clipping boundaries. The present invention will be described further by way of example with reference to an embodiment thereof as illustrated in the accompanying drawings, in which:-

FIG. 1 is a block diagram of a raster graphic system arranged to perform according to the present invention;

FIG. 2 is a block diagram of a display processor of the system shown in Fig. 1;

FIG. 3 is a block diagram showing the logical data flow of the raster graphic system of Fig. 1;

FIG. 4 is a block diagram of the data flow for generation of programmable characters;

FIG. 5 is a block diagram of the data flow for generation of fixed characters;

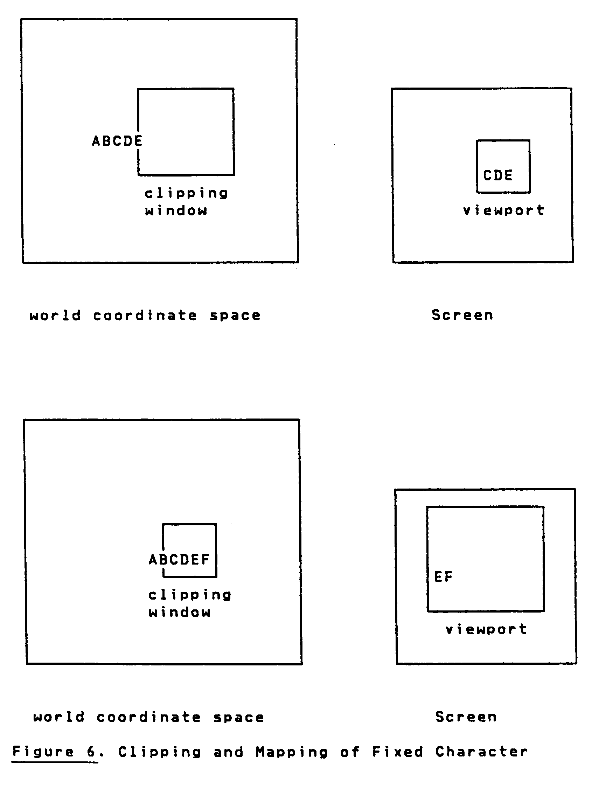

FIG. 6 is a schematic representation of clipping and mapping of fixed characters from a world coordinate space to a viewport on a display screen;

FIG. 7 is a table showing the register contents for combinations of character path and character box orientation; and

FIG. 8, in sections 8a and 8b, is a flow chart of one method for clipping fixed character strings according to the present invention. In the drawing, like elements are designated with similar reference numbers, and identical elements in different specific embodiments are designated by identical reference numbers. The Graphics Display Processor shown in Fig. 2 forms part of a Graphics Raster Display System, shown in Fig. 1.

For geometric primitives, such as vectors (lines), markers, or polygons (or equivalently, the vertices of polygons), the transformation-clipping-mapping process may be executed.

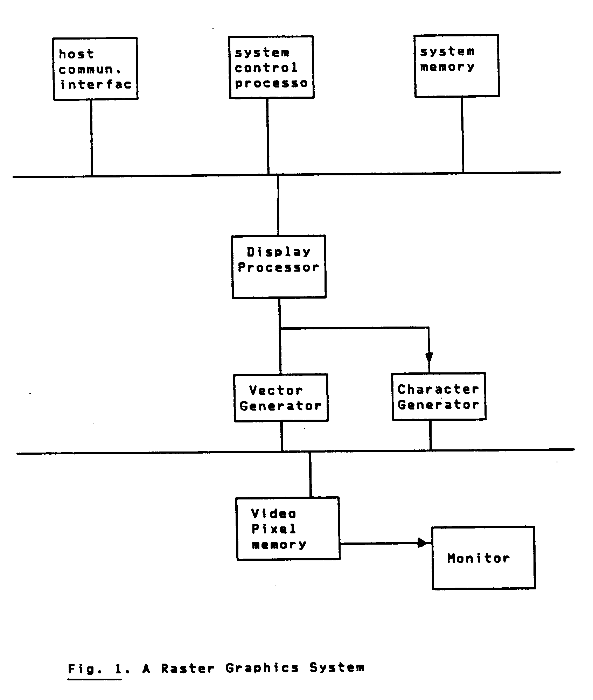

Consider the raster graphics system in Fig. 1.

It consists of the following major components.

1. System Control Processor

EP 0 231 060 B1

2. Host Communication Interface Processor
3. Display Processor
4. Hardware Rasteriser - Vector Generator
5. Hardware Character Generator
6. Video Pixel Memory
7. System Memory

The following is a brief overview of the functions of the major components. It should be noted that each of the major hardware components listed above is known in the prior art and may be implemented by components of a commercially available graphics display system such as the IBM 5080.

1. System Control Processor

- The System Control Processor is a general purpose processor that has master control of the System. The System Control Processor is responsible for servicing all attached Graphics I/O devices.
- Coordinating the associated processing with the Display Processor.
- The System Control Processor interfaces with the host via the Host Communication Interface.

2. Host Communication Interface

- The Host Communication Interface provides the serial interface of the System to the host.

3. Display Processor

The Display Processor is responsible for executing graphics orders in the Display Storage Program, residing in the system memory and is concerned mainly with the generation of the image that will appear on the Display Monitor. It has the following functions:
- Decoding graphics orders and executing non-drawing orders; e.g. book keeping and control.
- Performing the transformation and clipping function to the geometric primitives: lines, characters, polygons, etc.
- Preparing geometric objects - lines, characters, markers, filled polygons - for display by preprocessing and feeding the data to the Vector Generator and the Video Pixel Memory.

4. Vector Generator

The Vector Generator is a Hardware Implementation of the Bresenham Line Generating algorithm, which takes the end points of a vector (line) as input, and generates pixels in the Video Pixel Memory as output for display.

5. Character Generator

The Character Generator consists of the 4 sets of base characters (of 4 different sizes). The Display processor passes the EBCDIC code point to the Character Generator, which then sends the prestored stroke data to the &vpm at the current position.

6. Video Pixel Memory

The Video Pixel Memory consists of 8 1k by 1k bit planes, which supports 256 colours simultaneously via colour look-up tables. The image stored here will be displayed in the Monitor.

Transformation-Clipping-Mapping Process

Each geometric primitive - vectors, programmable character strokes, and fixed characters - undergo the transformation-clipping-mapping process as follows:-
1. The first stage is the transformation in the world coordinate space. This might be a rotation, translation, scaling, shearing, or a combination of these and is performed by matrix multiplication.
2. The second stage is the clipping against the clipping box.
3. The last stage is mapping the clipped data to the viewport in the screen.

3

The world coordinate space is a 16-bit space (-32k to 32k in x, y, z direction). The clipping box is a rectangular box in the world coordinate space. The resolution of the screen is 10-bit space (1k x 1k in x and y) and the viewport is a rectangle on the screen with sides parallel to the x and y axis.

Using a vector (line) as an example:

1. transformation -

for the end points of a vector, which is in the 16-bit fixed number format, the matrix multiplication is done in the (-32k,32k-1), 16-bit x,y,and z space.

2. clipping -

using the two end points of a vector (line) and clipping to the clipping box specified by the users (discard the portion of the line outside of the clipping box). The computation is done in 16-bit space

3. mapping -

mapping the contents inside the clipping box (in 3D) or clipping window (in 2D) to a viewport on the screen specified by the user. The screen coordinate is (0,4k-1) by (0,4k-1), which then mapped to the 1k by 1k screen.

Characters in a Graphics Display

There are two types of characters supported by the preferred embodiment of the present invention.

1, Fixed Characters

2. Programmable Characters

The Programmable Characters are composed of user-defined strokes, and the Display Processor treats each stroke as individual vector. Each stroke can be transformed, clipped, and mapped to the screen.

However, a Fixed Character string is treated differently -

1. The initial position of the character string can be transformed

2. Each individual character is contained in a character box, which cannot be transformed

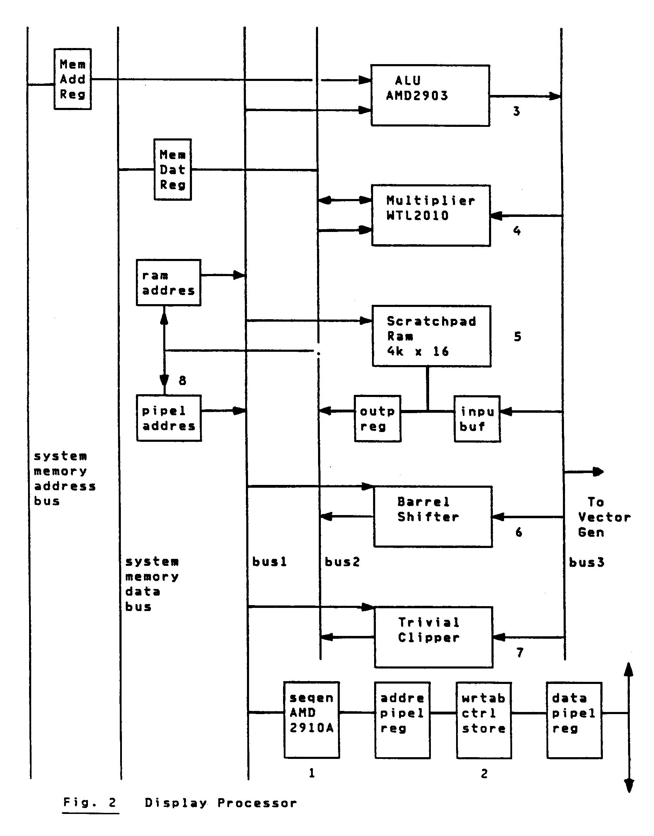

3. Each character is clipped against the viewport (on the screen) by using the character box - if any part of the box is outside the viewport, then the character is not displayed (see Fig. 1 and 2).

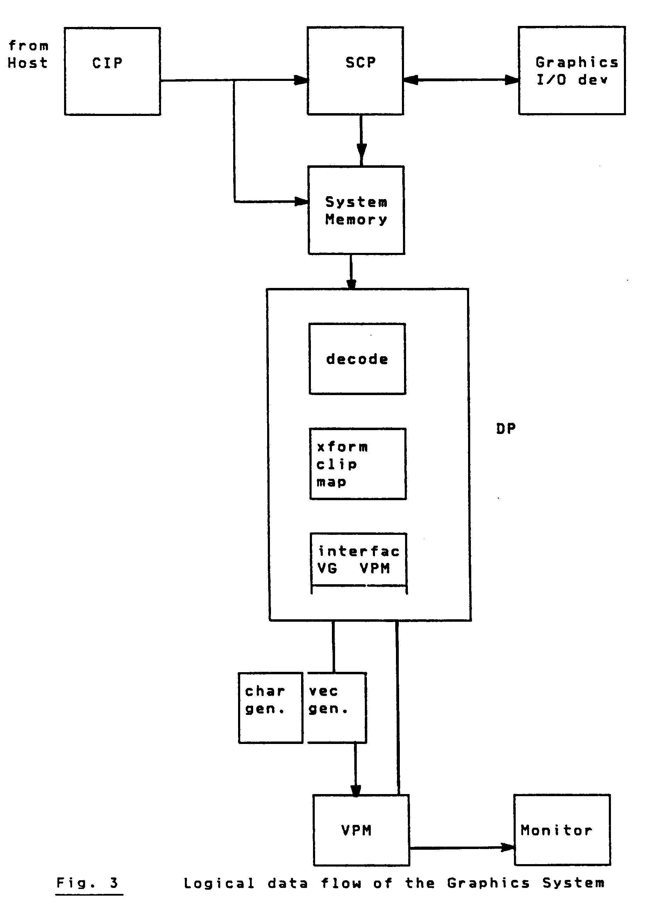

The Logical Data Flow for Processing Characters (Fig. 3)

1. The Application Program is loaded from the host via the Host Communication Interface to the System Memory

2. The System Control Processor preprocesses the data (depending on the work required), then interrupts the Display Processor

3. The Display Processor then processes the data

4. The data is then passed to the Video Pixel Memory for display directly or via the Vector Generator or the Character Generator.

Programmable Characters (Fig. 4)

The Programmable Characters can be handled in the same way as vectors, because they are composed of strokes. The Display Processor fetches the stroke data of the characters, formats the data to a vector format and transforms, clips, and maps each vector. As far as the Vector generator is concerned, it just receives the same data as the Draw Line Orders.

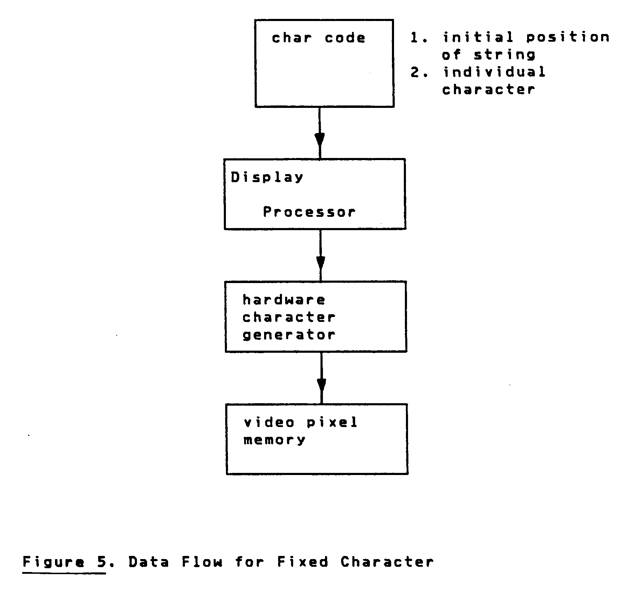

Fixed Characters (Fig. 5)

The handling of the Fixed or Base Characters is different from the handling of the Programmable ones. Each character cannot, by definition, be transformed, but the initial position of a character string can. The clipping applies to the character box containing the character, namely, if any part of the character box is outside the clipping boundary, then the character (or marker) is rejected.

Character Path and Character Box Orientation

Among the attributes associated with the Characters, there are two which affects the position of the character string in display:

## 1. Character Path Inline Orientation

Character Path Inline Orientation defines the direction for placing the next character on the line with respect to the current character. There are four directions:

a. Zero degrees, left to right horizontal; default value.

b. 90 degrees, vertical up.

c. 180 degrees, right to left horizontal.

d. 270 degrees, vertical down.

## 2. Character Box Orientation

Character Box Orientation defines the direction of the rectangle within which the character is drawn with respect to the x-axis of the Display coordinate system. There are two cases:

a. zero degree; character box width is parallel to the x-axis and character box height is parallel to the y-axis; default value.

b. 90 degree; character box width is parallel to the y-axis and character box height is parallel to the x-axis; character box is rotated 90 degrees counterclockwise.

In the preferred embodiment, these two attributes are determined by the Attribute Register 17, which is an 8-bit register whose contents (iiiirrrr) are defined as follows:

iiii => character inline path orientation

(0000 = zero degree, 0100 = 90 degree, 1000 = 180 degree, 1100 = 270 degree)

rrrr => character box orientation

(0000 = zero degree, 0100 = 90 degree)

## Procedure for Clipping Fixed Character String

First, view the Fixed Character in the world coordinate space as the image of the inverse window-to-viewport mapping.

## Window-to-Viewport Mapping

Assume that the boundary of the clipping window is defined by

xclip1, xclip2 (left, right)

yclip1, yclip2 (bottom, top)

zclip1, zclip2 (near, far)

where the numbers above are between -32k and 32k-1, and the viewport boundary is defined by

xview1, xview2

yview1, yview2

where the numbers above are between 0 and 4k. The window-to-viewport ratio is given by

$$wvx = (xview2 - xview1)/(xclip2 - xclip1)$$
$$wvy = (yview2 - yview1)/(yclip2 - yclip1)$$

both wvx and wvy being floating point numbers. Let xratio, yratio denote the inverses of wvx and wvy respectively.

After clipping, a point (x, y) is mapped to the screen by the following formula:

$$x ---> (x - xclip1)^* wvx + xview1$$
$$y ---> (y - yclip1)^* wvy + yview1$$

Clipping the Inverse Image of Fixed Character

The size of the character box is provided by the application program via the attribute register 18.

Let d1 and d2 denote the width and the height of the particular character box being processed in the screen space and let e1 and e2 be the width and the height of the box under the inverse window-to-viewport mapping. This gives:

$$e1 = d1.xratio$$

e2 = d2.yratio

For a character with character box orientation = 90 degree, we have

e3 = d1.yratio
e4 = d2.xratio

and assuming the pre-transformed initial position is at (a0,b0,c0) the part of the program to draw the character string 'ABCDEFG' beginning at (a0,b0,c0) is

    2A40
    C1C2
    C3C4
    C5C6
    .... ,

where '2A40' is the graphics order for drawing characters in the preferred embodiment; and the C1,C2,etc. are the EBCDIC codes for the characters A, B, etc. Each Character starts at the lower left corner of the character box.

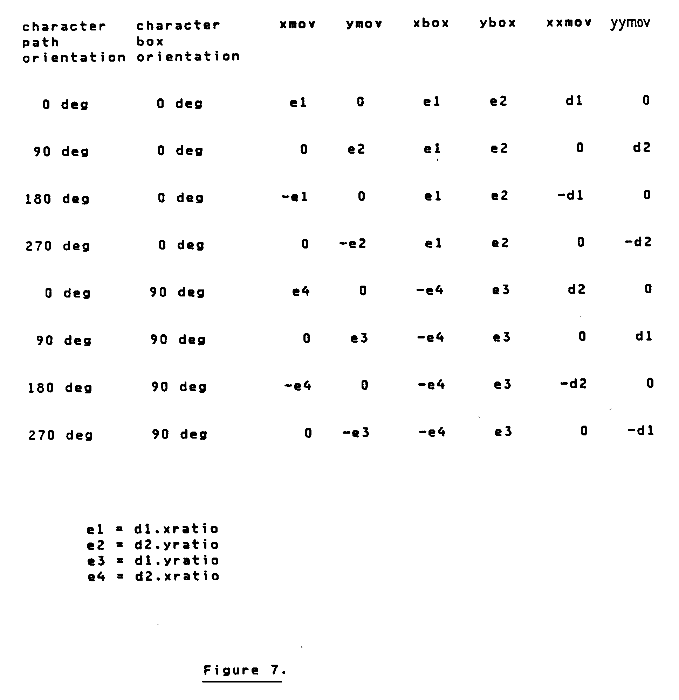

There are other geometric attributes associated with the fixed characters - character path and character orientation. Six registers are used to store the information needed for handling the character path and orientation - xmov, ymov, xbox, ybox, xxmov, and yymov - see Figure 7.

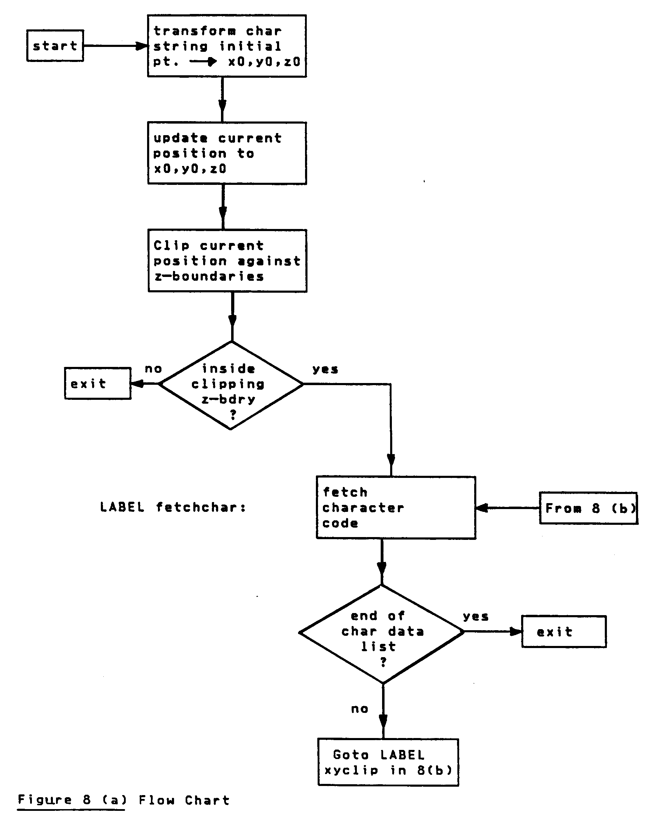

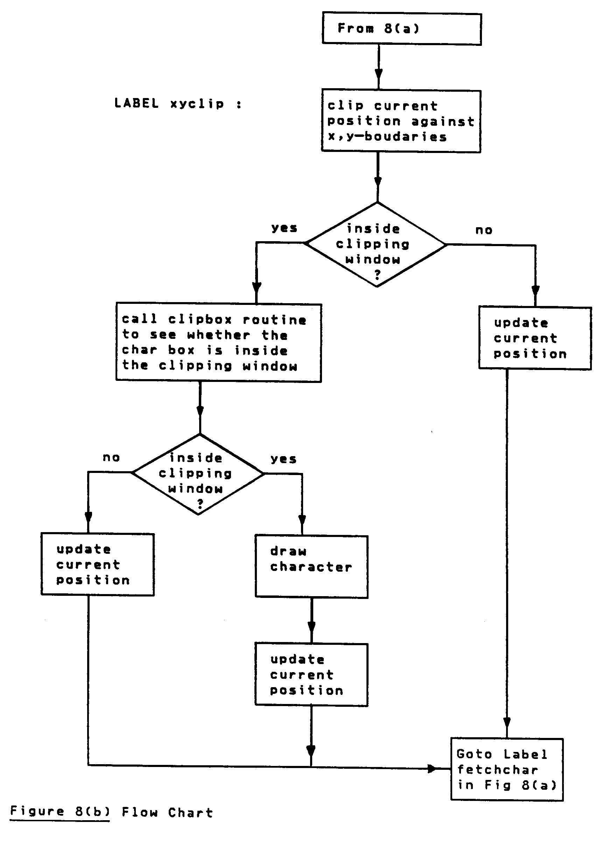

Procedure to Draw a String of Fixed Characters (Fig. 8)

Procedure(Drawing Character)

1. transform the initial position (a0,b0,c0) to the new position (x0,y0,z0);
2. update the current point position register (x,y,z) to (x0,y0,z0) and call the clipping subroutine to clip (x,y,z);
3. clip against z-clipping boundaries
   - if the initial point is rejected, the entire character string is outside the clipping box - EXIT;
   - ELSE
4. fetchchar
   - fetch the character code;
   - if end of character list - EXIT;
   - ELSE
5. xyclip
   - clip the current position against x and y-clipping boundaries
   - if the initial point is rejected by x-y clipping, update the current point register (x,y,z) by (x+xmov,y+ymov,z) - fetchchar
   - ELSE (the current position being accepted)
6. clipbox = CLIPBOX(x,y,xbox,ybox)
   - check whether the character box is inside the clipping window (x,y direction)
   - if the character box is not completely inside the clipping window, the character is not drawn but the current point position is updated to (x+xmov,y+ymov,z); the screen position register (x',y') updated to (x'+xxmov,y'+yymov) - fetchchar
   - ELSE (the character box being completely inside the clipping window)
   - draw the character at the screen position (x',y') with given character orientation; update the current point position to (x+xmov,y+ymov,z); update the screen position register (x',y') to (x'+xxmov,y'+yymov)
   - fetchchar

The routine of section 8b can be called CLIPPOINT and that part of the routine, after the mapping, can be referred to as CLIPEACH.

The following is an example of a CLIPBOX routine which could be used in the above procedure. Assume that the boundaries of the 2D clipping window are given by xclip1, xclip2, yclip1, and yclip2; which is contained in XA, XB, YA, and YB. The character box is bounded by x, y, x+xmov, y+ymov, which will be contained in X1, X2, Y1, Y2.

```
              YB

       * * * * * * * * * *                        Y2

       *           *                       * * * * * * *

       *           *                       *         *

  XA   *           *  XB              X1   *         *  X2

       *           *                       *         *

       * * * * * * * * * *                  * * * * * * *

           YA                                  Y1


       CLIPPING WINDOW                     OBJECT EXTENT
```

One flag will be set depending upon the relative positions of the above two rectangles. If the box is inside the window, then the inside-flag is set to 1. If the box is not completely inside the window, the inside-flag is set to 0.

The following is the procedure to check the relative position of a rectangle bounded by $a <= x <= a + b$ and $c <= y <= c + d$ against a a rectangle bounded by $XA <= x <= XB$ and $YA <= y <= YB$

```
Program Clipbox(a,b,c,d)

                    X1 = a;

                    X2 = a + c;

                    Y1 = b;

                    Y2 = b + d;

                    inside-flag = 1;

                    If X2 - XA < 0 , goto outside;

                    If XB - X1 < 0 , goto outside;

                    If Y2 - YA < 0 , goto outside;

                    If YB - Y1 < 0 , goto outside;

                    If X1 - XA < 0 , goto outside;

                    If XB - X2 < 0 , goto outside; ====>


          ===> If Y1 - YA < 0 , goto outside;

                    If YB - Y2 < 0 , goto outside;

                    return to calling program.


             - outside::


                    inside-flag = 0

                    return to calling program.
```

**Claims**

1. A method, in a graphics display system in which geometric primitives are defined in a world coordinate system, for clipping character strings comprising a number of fixed characters, each generated in a character box in a screen coordinate system, against a predetermined clipping box in the world coordinate system, the method comprising the steps of:
   transforming and storing the character string initial position, the size of the character box and an increment to step to the next character position from the screen coordinate system to the world coordinate system and for each character of the string;
   clipping the character against X and Y boundaries of the clipping box by testing the character position and the size of the character box in the world coordinate system to determine if any part of the character box when mapped to the world coordinate system falls within the X and Y boundaries and only issuing a draw character order for the character if no part of the character box falls outside the X and Y boundaries;
   updating the character position in the world coordinate system by the transformed increment to generate the next character position in the world coordinate system and updating the character position in the screen coordinate system by said increment to step to the next character position in said screen

8

coordinate system.

2.  A method as claimed in Claim 1 comprising the prior step of clipping the character string against Z-axis clipping boundaries of the clipping box by testing the character sting initial position to determine if it is inside the Z-axis clipping boundaries and only proceeding if the test is positive.

**Patentansprüche**

1.  Verfahren zum Abschneiden von Zeichenketten gegen eine vorbestimmte Abschneidebox eines Weltkoordinatensystems in einem graphischen Anzeigesystem, in dem geometrische Grundelemente in dem Weltkoordinatensystem festgelegt sind, wobei die Zeichenketten eine Anzahl fester Zeichen enthalten, von denen jedes in einer Zeichenbox in einem Schirmkoordinatensystem erzeugt wird, und das Verfahren die folgenden Schritte aufweist:
    Umformen und Speichern der Anfangsposition der Zeichenkette, der Größe der Zeichenbox und eines Zuwachses, um zur nächsten Zeichenposition vom Schirmkoordinatensystem zum Weltkoordinatensystem zu schreiten, und für jedes Zeichen der Kette,
    Abschneiden des Zeichens gegen X- und Y-Grenzen der Abschneidebox durch Testen der Zeichenposition und der Größe der Zeichenbox im Weltkoordinatensystem, um festzustellen, ob irgendein Teil der Zeichenbox innerhalb der X- und Y-Grenzen liegt, wenn sie im Weltkoordinatensystem abgebildet wird, und nur dann Ausgeben eines Befehls zum Darstellen des Zeichens, wenn kein Teil der Zeichenbox außerhalb der X- und Y-Grenzen liegt,
    Erneuern der Zeichenposition im Weltkoordinatensystem durch den umgeformten Zuwachs, um die nächste Zeichenposition im Weltkoordinatensystem zu erzeugen, und Erneuern der Zeichenposition im Schirmkoordinatensystem durch diesen Zuwachs, um in dem Schirmkoordinatensystem zur nächsten Zeichenposition zu schreiten.

2.  Verfahren nach Anspruch 1, das zuvor den Schritt des Abschneidens der Zeichenkette gegen die Abschneidegrenzen einer Z-Achse der Abschneidebox durch Testen der Anfangsposition der Zeichenkette zum Bestimmen, ob sie innerhalb der Abschneidegrenzen der Z-Achse liegt, und nur dann Fortfahren, falls der Test positiv ist, aufweist.

**Revendications**

1.  Procédé dans un système d'affichage graphique dans lequel des primitives géométriques sont définies dans un système de coordonnées mondiales, pour découper des suites de caractères comprenant un certain nombre de caractères fixes, chacun de ceux ci étant généré en un bloc de caractère dans un système de coordonnées d'écran, en fonction d'un bloc de découpage prédéterminé dans le système de coordonnées mondiales, le procédé comprenant les étapes suivantes:
    -   la transformation et la mémorisation de la position initiale de la suite de caractères, de la taille du bloc de caractère et d'un incrément pour passer à la position du caractère suivant du système de coordonnées d'écran au système de coordonnées mondiales et pour chaque caractère de la suite,
    -   le découpage du caractère en fonction des limites X et Y du bloc de découpage par le test de la position du caractère et de la taille du bloc de caractère dans le système de coordonnées mondiales pour déterminer si une partie quelconque du bloc de caractère lorsqu'il est configuré dans le système de coordonnées mondiales, tombe à l'intérieur des limites X et Y et la délivrance d'un ordre de traçage de caractère pour le caractère que si aucune partie du bloc de caractère ne tombe à l'extérieur des limites X et Y,
    -   la mise à jour de la position du caractère dans le système de coordonnées mondiales par l'incrément transformé afin de générer la position de caractère suivante dans le système de coordonnées mondiales, et
    -   la mise à jour de la position du caractère dans le système de coordonnées d'écran par ledit incrément afin de passer à la position de caractère suivante dans ledit système de coordonnées d'écran.

2.  Procédé selon la revendication 1 comprenant l'étape préalable de découpage de la suite de caractères en fonction des limites de découpage sur l'axe Z du bloc de découpage par le test de la position initiale de la suite de caractères pour déterminer si elle se trouve à l'intérieur des limites de découpage selon l'axe Z et la poursuite de l'exécution du procédé que si le test est positif.

Fig. 1. A Raster Graphics System

Fig. 2   Display Processor

Fig. 3    Logical data flow of the Graphics System

```
┌─────────────────┐
│ strokes data    │
│ for PCS         │
│ in sys mem      │
│                 │
└─────────────────┘
          │
          ▼
┌─────────────────┐
│ Display         │
│                 │
│ Processor       │
└─────────────────┘
          │
          ▼
┌─────────────────┐
│ Vector          │
│                 │
│ Generator       │
└─────────────────┘
          │
          ▼
┌─────────────────┐
│ Video pixel mem.│
│                 │
│                 │
└─────────────────┘
```

Figure 4.    Data Flow for Programmable Characters

14

```
┌─────────────────┐   1. initial position
│   char code     │      of string
│                 │   2. individual
│                 │      character
└─────────────────┘
         │
         ▼
┌─────────────────┐
│ Display         │
│                 │
│    Processor    │
└─────────────────┘
         │
         ▼
┌─────────────────┐
│  hardware       │
│  character      │
│  generator      │
└─────────────────┘
         │
         ▼
┌─────────────────┐
│  video pixel    │
│  memory         │
│                 │
└─────────────────┘
```

Figure 5. Data Flow for Fixed Character

EP 0 231 060 B1

world coordinate space                Screen

world coordinate space                Screen

Figure 6. Clipping and Mapping of Fixed Character

| character path orientation | character box orientation | xmov | ymov | xbox | ybox | xxmov | yymov |
|---|---|---|---|---|---|---|---|
| 0 deg | 0 deg | e1 | 0 | e1 | e2 | d1 | 0 |
| 90 deg | 0 deg | 0 | e2 | e1 | e2 | 0 | d2 |
| 180 deg | 0 deg | -e1 | 0 | e1 | e2 | -d1 | 0 |
| 270 deg | 0 deg | 0 | -e2 | e1 | e2 | 0 | -d2 |
| 0 deg | 90 deg | e4 | 0 | -e4 | e3 | d2 | 0 |
| 90 deg | 90 deg | 0 | e3 | -e4 | e3 | 0 | d1 |
| 180 deg | 90 deg | -e4 | 0 | -e4 | e3 | -d2 | 0 |
| 270 deg | 90 deg | 0 | -e3 | -e4 | e3 | 0 | -d1 |

```
e1 = d1.xratio
e2 = d2.yratio
e3 = d1.yratio
e4 = d2.xratio
```

Figure 7.

Figure 8 (a) Flow Chart

Figure 8(b) Flow Chart